(19) **Europäisches Patentamt / European Patent Office / Office européen des brevets**

(11) **EP 4 578 174 B1**

(12) **EUROPEAN PATENT SPECIFICATION**

(45) Date of publication and mention of the grant of the patent:
**05.08.2026 Bulletin 2026/32**

(21) Application number: **22769618.4**

(22) Date of filing: **26.08.2022**

(51) International Patent Classification (IPC):
**H04L 67/12** *(2022.01)*    **H04L 69/24** *(2022.01)*
**H04L 67/125** *(2022.01)*    **H04L 69/04** *(2022.01)*

(52) Cooperative Patent Classification (CPC):
**H04L 67/12; H04L 67/125; H04L 69/04; H04L 69/24**

(86) International application number:
**PCT/EP2022/073754**

(87) International publication number:
**WO 2024/041738 (29.02.2024 Gazette 2024/09)**

(54) **MANAGING NODES CONTROLLING DEVICE-TO-DEVICE COMMUNICATIONS OF SENSOR DATA BASED ON LINK CAPACITY BETWEEN MANAGED NODES**

VERWALTEN VON KNOTEN, DIE KOMMUNIKATION VON GERÄT ZU GERÄT VON SENSORDATEN AUF BASIS DER VERBINDUNGSKAPAZITÄT ZWISCHEN VERWALTENDEN KNOTEN STEUERN

GESTION DES NOEUDS CONTRÔLE DES COMMUNICATIONS D'APPAREIL À APPAREIL DES DONNÉES DE CAPTEUR SUR LA BASE DE LA CAPACITÉ DE LIAISON ENTRE LES NOEUDS GÉRÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.07.2025 Bulletin 2025/27**

(73) Proprietor: **Telefonaktiebolaget LM Ericsson (publ)**
**164 83 Stockholm (SE)**

(72) Inventors:
• **ÖKVIST, Peter**
  **973 41 LULEÅ (SE)**
• **ARNGREN, Tommy**
  **954 42 SÖDRA SUNDERBYN (SE)**
• **JALDÉN, Niklas**
  **749 42 ENKÖPING (SE)**

(74) Representative: **Ericsson Patent Development Torshamnsgatan 21-23 164 80 Stockholm (SE)**

(56) References cited:
**WO-A1-2020/177740**    **US-A1- 2020 135 032**
**US-A1- 2020 229 206**    **US-A1- 2021 114 616**

**Description**

TECHNICAL FIELD

The present disclosure relates to device-to-device wireless communications of sensor data for vehicle platooning and other applications.

BACKGROUND

Cloud gaming and remote rendering works by letting a user render high-fidelity images of a game on remote hardware, utilizing graphics processing unit (GPU) render farms with much more rendering power than the user's phone any typical desktop computers.

Rendered frames are then streamed from the rendering machine to the user's device (smartphone, tablet, extended reality (XR) HMD) which operates in a limited role as an input device for controls and provides the display where the transmitted frames are displayed to the user.

Render farms or data centers are usually owned by either the company that sells the user the game or by an online gaming service provider (for example Google with its Stadia), or similar solutions as with Oculus's Quest, Rift and Go products, all having in common that main processing power is located outside the user's device, outside the user's building, and possibly outside the user's city.

In some gaming solutions, the user typically pays a monthly fee to use the outside hosted processing resources and access the game platform. Valve Corporate launched their home streaming solution, called Remote Play, in 2017, allowing users to render games on one device while playing the game on another device. The solution essentially makes one device a local "render node" accessible by clients with the same user login on the same network. This solution has since been upgraded to work when the "end user client" is not even on the same network, although with increased latency.

There is an emerging trend that processing or rendering power are moved outside the user equipment and sometimes outside the users network, and future solutions may include offshoring processing capacity.

Devices with sufficient processing resources, e.g., fast GPUs, are becoming more commonplace, such as in home gaming consoles, office workstations, and high-end tablets. Cars, surveillance cameras and other non-computer devices are becoming equipped with GPUs (or hardware similar to GPU such as TPU) for performing machine learning inferencing efficiently. There will likely be hundreds of available rendering devices in each parking lot, in adjacent traffic lanes at the highway, at the coffee shop, etc., in the future, which are able to supply processing power for a multitude of devices used by people in the vicinity of the rendering devices.

The ability of GPUs to provide high performance processing on basically any platform is dependent upon providing reliable connectivity between processing nodes which render content and the receiver nodes which use the content.

Most new vehicles on the market support adaptive cruise control. That is, the driver will set a preferred cruising speed, or the vehicle automatically set a speed usually with reference to maps that include the maximum speed of the road. The vehicle will automatically adapt the speed with respect to slower moving objects or accelerate if the user chooses to pass a vehicle by changing lane. The vehicle can also assist the driver with holding the vehicle correctly within the road marking lines, automate parking and maintain distances to leading vehicles. These driver assistance features are made possible by the extensive set of sensors that modem vehicles have, such as Lidar, ultrasound sensors and front and rear cameras, and even infra-red cameras to detect animals and humans on or close to the road. This requires a substantial amount of processing power for each individual vehicle to collect, analyze, and act on the data captured from the many sensors.

US 2021/114616 describes a vehicular communication bonding unit that creates a broadband access channel from an aggregation of multiple wireless devices used simultaneously, where the computing power may be used by remote applications of users.

SUMMARY

Some embodiments disclosed herein are directed to a managing node for controlling device-to-device (D2D) communications of sensor data between managed nodes of vehicles, user devices, and/or roadside infrastructure. The managing node is configured to perform operations to determine capacity of wireless communication links of the managed nodes. Operations also include to determine data generation rate of at least one sensor to be communicated through the wireless communication links. Operations also include to select one of the following based on the capacity of the wireless communication links and the data generation rate: compress data of the at least one sensor before transmission through at least one of the wireless communication links; transmit uncompressed data of the at least one sensor through the at least one of the wireless communication links; and preprocess data of the at least one sensor and transmit the preprocessed data through the at least one of the wireless communication links. Operations also include to initiate performance of the selection.

Other embodiments are directed to a method performed by a managing node for controlling device-to-device (D2D) communications of sensor data between managed nodes of vehicles, user devices, and/or roadside infrastructure. The method includes determining capacity of wireless communication links of the managed nodes. The method also includes determining data generation rate of at least one sensor to be communicated through the wireless communication links. The method also includes selecting one of the following based on the capacity of the wireless communication links and the data generation rate: compress data of the at least one sensor before transmission through at least one of the wireless communication links; transmit uncompressed data of the at least one sensor through the at least one of the wireless communication links; and preprocess data of the at least one sensor and transmit the preprocessed data through the at least one of the wireless communication links. The method also includes initiating performance of the selection.

Some potential advantages of these embodiments are that they allow the synchronization of data captured by sensors across multiple vehicles while enabling more optimal balancing of data distribution delays, network resource utilization, and sending and receiver processing resource utilization. This more optimal balancing may be performed despite the types of sensor data and sensor output characteristics widely varying between the vehicle sensors. When embodiments are implemented in vehicles which are traveling in a platoon, the vehicles may provide improved safety through increased situational awareness across the platoon and/or achieve improved fuel economy of the vehicles through reduced air resistance and avoiding unnecessary variations in acceleration, deceleration, and stopping of the individual vehicles.

Other managing nodes, methods, and computer program products according to embodiments will be or become apparent to one with skill in the art upon review of the following drawings and detailed description. It is intended that all such additional managing nodes, methods, and computer program products be included within this description and protected by the accompanying claims.

## BRIEF DESCRIPTION OF THE DRAWINGS

Aspects of the present disclosure are illustrated by way of example and are not limited by the accompanying drawings. In the drawings:

Figure 1 illustrates a block diagram of a managing node providing data flows and operations between a plurality of sensors, physical components, and logical elements in accordance with some embodiments of the present disclosure;

Figure 2 illustrates a block diagram of a plurality of vehicles configured to share sensor data in accordance with some embodiments of the present disclosure;

Figure 3 illustrates a block diagram which illustrates operational components of a managing node for evaluating and/or determining roles of a cluster of devices in accordance with some embodiments of the present disclosure;

Figure 4 illustrates a flowchart of operations that can be performed by a managing node in accordance with some embodiments of the present disclosure;

Figure 5 illustrates a flowchart of other operations that can be performed by a managing node in accordance with some embodiments of the present disclosure; and

Figure 6 illustrates a block diagram of components of a managing node that are configured to operate in accordance with some embodiments of the present disclosure.

## DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of various present inventive concepts to those skilled in the art. It should also be noted that these embodiments are not mutually exclusive. Components from one embodiment may be tacitly assumed to be present/used in another embodiment.

Various embodiments of the present disclosure are directed to improving the transfer of sensor data from one vehicle to another vehicle, such as where the sensor data can be shared for use in resolving sensor blind spots of the receiving vehicle and other operations such as sensor fusion. Although embodiments herein are primarily described in the context of transferring and using information to and/or from a ground based vehicle such as an automobile, the invention is not limited thereto. Instead, these and other related embodiments may be used with nodes located in other types of vehicles, including without limitation, trains, aircraft, ships, bicycles, and buses.

Some example embodiments are directed to vehicles that traveling together in a group or in a similar direction, which can also be called platooning. Platooning allows vehicles to decrease the distances between the vehicles to decrease fuel consumption, increase the capacity of channels of travel such as roads, etc. To do this, all vehicles platooning together should at least be configured to accelerate or brake under computer control based on the other vehicle's actions in the platoon, in order to maintain vehicle safety while and increasing fuel and capacity efficiency.

Various other embodiments of the present disclosure are directed to singular vehicles traveling outside of a platoon or in a platoon communicating with stationary base stations such as roadside devices which have sensors that output data to be shared with other vehicles and/or processes that operate based on sensor data received from vehicles.

Various other embodiments of the present disclosure are directed to singular vehicles traveling outside of a platoon or in a platoon communicating with user devices, such as cellphones, which have sensors that output data to be shared with other vehicles and/or processes that operate based on sensor data received from other vehicles.

Sensor fusion is the ability to bring together inputs from multiple sensors, including without limitation radars, lidars, and cameras, to form a single model or image of the environment around a vehicle. For example, long-range radar may be used for cruise control, short-range radar may be used to detect other traffic, as well as lidar and a camera-based subsystem may be used for all kinds of other functions. In other words, rather than the vehicles relying just on one type of sensor data at specific moments, sensor fusion makes it possible to fuse various information from the sensor suite - such as shape, speed and distance - to ensure reliability.

Real-time operation is essential for Adjacent Vehicle (AV) systems and Advanced Driver Assistance Systems (ADAS), so one of the major challenges is the 'synchronization' of data captured by each sensor to extract accurate and relevant information. The techniques used by each sensor to capture information are different, so a deep understanding of how each modality operates can be important to effectively 'fuse' these diverse datasets.

However, data sharing between vehicles has traditionally been resource consuming making all-onboard-processing preferrable. One traditional argument for onboard processing is that off-board processing may require a possibly large amount of data to be shared. Yet, the demand for finer, more granular, higher time-resolution data is monotonically increasing. A further argument for onboard processing is based on the question of why should a node communicate large amounts of data when the data can be processed locally. In short, traditionally, sensor/vehicle industry provides no practical way to share data between nodes given their respective (internal/external) interface limitations. Nevertheless, the traditional thinking does not adequately consider capabilities of emerging 5G/6G cellular connectivity capabilities.

The following are non-limiting examples which illustrate the need for raw data in a vehicle-to-x sensor fusion operation and advantages of off vehicle sensor fusion.

One problem with the current thinking of sharing "messages" between vehicles as well as vehicles and road infrastructure, e.g. traffic lights and signs, is the limitation coming with the content of pre-defined/available messages. A sender may with an aggregated message assume that a recipient will use content of the aggregated message in a similar manner as the sender.

For each new situation, new demands and new messages should be agreed upon and distributed to the vehicles and infrastructure in some ad-hoc manner. This is likely a rather slow and inefficient process. Further, current state of art assumes sharing of information that is already processed (detected, processed, IFTT-evaluated and action thereof transmitted) by the vehicle that has the sensor mounted. This is a significant drawback because vehicles can have different types of processing algorithms that can have different abilities to extract other information if the processing algorithms were instead fed the actual "raw" data output by a sensor; in a general context, the processing of sensor-data in a first vehicle due to its intended use and purpose might not be suited for the purpose and physical capability of a second, third, etc., receiving vehicle.

As existing solutions are dependent on authorized communication between vehicles in operation, there are typically limitations to what events already defined information entities needed for a certain agreed service/use-case such as platooning can handle, and that most real-life use cases are likely neither identified nor considered in the agreement and authorization processes.

Problem-framing example #1, a smallest platoon made up of two vehicles, e.g. one small car and one heavy truck, will have significantly different setup and characteristics depending on which of the vehicles that are leading and which one that is trailing. In a first scenario with the truck leading the smaller car, the small car may listen only for the leading trucks brake-actuator signal and respond thereto based on the car's braking distance and based on the car being able to stop more quickly than the truck. In the opposite example where the car is leading the truck, the truck cannot base its speed and distance simply based on that of the leading car and responding to the brake beacon signal since the truck can have a significantly longer braking distance. If both vehicles could share the others' sensor raw data, they could individually apply relevant processing.

Problem-framing example #2, two similarly sized, equipped and capable trucks, may provide a much more efficient two-vehicle joint operation if the trailing truck had the same information (i.e. look-ahead possibilities) as the leading truck and could act on the same sensor data as the first truck's control (road-monitoring, breaking, etc.) system.

Then, when panic breaking occurs at the leading truck, the trailing truck has access to the same sensor data and may nearly-simultaneously act so as to not overly enter the buffer-distance between the trucks.

Problem-framing example #3, when cars are queued up at a red traffic light and the light turns green, a first car releases its breaks and brake lights turn off, then it starts to move, then a second car's driver observing the leading car's brake light deactivation releases the breaks and starts moving ... etc. This sequence can amount to a significantly delayed reaction time to start moving. In contrast, if all car drivers could observe the red-to-green traffic light transition and simultaneously respond thereto (i.e. the analogy of sharing sensor data), the entire queue of vehicles could potentially start moving simultaneously (while still maintaining proper vehicle-vehicle gaps) and thereby significantly improve traffic flow.

In essence, these operations related to "sharing of information between vehicles" assume that an in-front vehicle's sensors detect something, the in-front vehicle then applies its own evaluation scheme, triggers an internal cause-action IFTT action, and as a result triggers transmission of an already designed root-cause-action-reflecting signal for any other vehicles to detect and potentially act on. But in most cases, this is not an optimal approach because a first vehicle may not know capabilities, intentions, etc. of receiving vehicles and can therefore not foresee how those vehicles will intend/must interpret and make use of the sensor data. In other words, the receiving vehicles cannot understand the underlaying triggers for the whatever-root-cause-beacon to be activated in the first vehicle, nor what sensor data that were input to that action, and must therefore assume worst case "leading vehicle may do whatever" and establish, e.g., distance margin and act in precautions for that.

Problem-framing final example, given the benefit with vehicles sharing respective sensor data (and not pre-processed trigger signals) and that it is plausible that not all vehicles hold state-of-the-art computational performance, it is still not solved how to decide at which other vehicle the sensor data processing tasks should be hosted given vehicles on-board computational and the vehicle's external (V2x) communication capabilities.

Next, off-premises end-user GPU rendering demand and capabilities is discussed.

Some GPUs now provide access to GPU-accelerated containers for AI, machine learning and high-performance computing (HPC), that can be run on-premise, in the cloud, and edge or using hybrid and multi-cloud deployments. In a next step or a step actually being pushed by the physical mobility of served users, the tier-one GPU rendering providers may offer high performance processing on more generally available off-premise platform(s). However, the currently understood most challenging aspect seems to arrive from relevant connectivity typically between rendering nodes, as well as the connectivity between rendering nodes/cluster and being served consuming users.

In emerging GPU farm paradigms, it is possible that rendering capacity will not be located in big monolithic cluster nodes, but geographically rather distributed among locally available nodes. Such local nodes may be, for example, hosted as vehicle-associated processing capacity (generic sensor processing capability) or more dedicated GPU processing capacity localized at certain vehicles "as a service" or distributed as spare "left-over" GPU capacity among devices such as vehicle passengers' devices. In one example, an edge cloud processing paradigm where some processing nodes are stationary and associated with a base station, and others mobile from being associated with vehicles.

How to dispatch and distribute processing capacity among a crowd of end-users requiring GPU rendering for extended reality (XR) headset usage, or sensor processing offload among a set of vehicles, or combinations thereof, are challenging and not understood/solved by any of today's solutions. Today's solutions seem to consider processing, rendering and load sharing of resources "in one eco system or common platform," but less into physically distributed aspects.

In that context, there are also unsolved aspects related to on-board user GPU rendering demands; with the assumption that GPU rendering are spread among (potentially mobile and geographically) distributed processing nodes, for example as if distribute among and between vehicles, some processing nodes (vehicles) may have better processing capabilities, some may have minor; some processing nodes (vehicles) may have communication interface capabilities, some not; some interface may be less capable. Some vehicles may have on-board rendering capacity "booked by own" passengers, other cars may run with no additional GPU processing load and may be considered as empty and a spare resource allocable by others.

The general aspect of routing processing capabilities so that a measure considered over a given physical/logical area is known.

Some embodiments for sensor data sharing between multiple nodes, which aims to improve the delay between sensor measurement and actuation in a multi-node (such as vehicle-to-vehicle) setup with multiple wireless transmission hops. The operations can include any one or more of the following steps:

- Determine capacity of wireless links (possible data-rate, associated delay). The wireless links can correspond to vehicle-to-vehicle communication links, vehicle-to-passenger communication links, passenger-to-passenger communication links, etc. The capacity determination can correspond to data-rate, communication delay (e.g., payload/bit-rate, encryption/decryption processing, etc.);
- Determine sensor data generation rate and/or associated attributes;
- Determine of managing (master) node (real or virtual node) to decide on compression scheme, as well as what nodes that should handle compression/decompression of data and what data to provide to which receiver. ;

- Determine appropriate data compression, such that $t_{compression}+t_{transmission}+t_{uncompress}$ is less than $t_{transmission}$ of uncompressed sensor data ($t_x$ where is the time for activity x), where the processing steps may be located in separate nodes, devices or vehicles.

Various embodiments will allow for increase sensor information in each node enabling nodes to make more educated estimates and improve overall vehicle-to-vehicle sensor data flow (like for example in various levels of platooning). Other device-to-device data sharing use case and scenarios (such as sharing-dispatching of XR/GPU rendering between nodes) may also apply.

Various potential advantages of the present disclosure include vehicles and roadside infrastructure may gain additional sets of skills enabled with sensor data obtainable from adjacent vehicles available in near real-time (depending on grade of real-time-ness of course) for decision making and actuator activation in own vehicle. Vehicle-vehicle sensor fusion and timely sharing of (close to) raw vehicle sensor data may enable more efficient vehicle clustering and platooning strategies.

Sharing of sensor raw-data between vehicles may create a significant load on transmission interfaces, however compression of the data at a vehicle having sufficient compression algorithms and processing capabilities, the data could be more effectively (in the delay domain as well as payload-size aspect) transferred between vehicles and decompressed by receiving vehicles. These operations may be performed while fulfilling a delay budget can be defined based on a non-compressing approach to sensor data sharing.

The distributed compression/decompression locality identification operations may then enable more HW/SW-demanding skills for a vehicle currently lacking any of the required processing capabilities, and thus improve efficiency of vehicle trains/platooning formations and operations.

In the end-user GPU sharing scenario, similar benefits and gains may apply although in different modes; a user gaming node (data consumer) may gain performance and end-user satisfaction given that the user's to-be-consumed data could be processed at more capable nodes, and potentially providing the user with rendering quality (frames per second (fps), resolutions) that user's own node is not capable of providing. A user data consumer may be any type of electronic device node, such as a smartphone, tablet, XR head mounted display, etc.

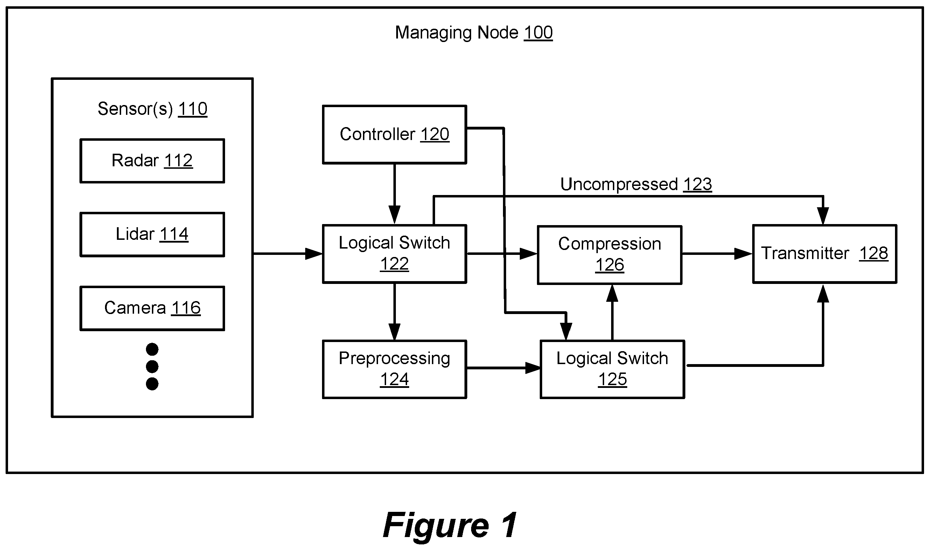

Figure 1 illustrates a block diagram of a managing node providing data flows and operations between a plurality of sensors, physical components, and logical elements in accordance with some embodiments of the present disclosure.

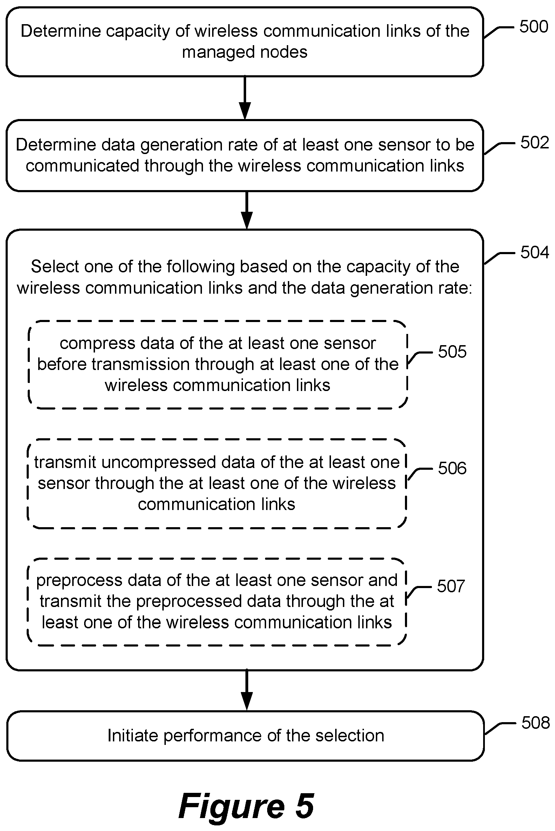

Figure 5 is a flowchart of operations that can be performed by a managing node device in accordance with some embodiments of the present disclosure.

Referring to Figures 1 and 5, some embodiments are directed to a managing node 100 for controlling device-to-device (D2D) communications of sensor data between managed nodes of vehicles, user devices, and/or roadside infrastructure. The managing node 100 is configured to perform operations to determine 500 capacity of wireless communication links of the managed nodes. Operations also include to determine 502 data generation rate of at least one sensor to be communicated through the wireless communication links. Operations also include to select 504 one of the following based on the capacity of the wireless communication links and the data generation rate: compress 505 data of the at least one sensor before transmission through at least one of the wireless communication links; transmit 506 uncompressed data of the at least one sensor through the at least one of the wireless communication links; and preprocess 507 data of the at least one sensor and transmit the preprocessed data through the at least one of the wireless communication links. Operations also include to initiate 508 performance of the selection.

Referring to Figure 1, sensors 110 may include, but are not limited to, at least one of: radar 112, lidar 114, and cameras 116. The managing node 100 is configured feed the sensor data output from sensor(s) 110. Then a controller 120 selects one of the following based on the capacity of the wireless communication links and the data generation rate: compress data of the at least one sensor before transmission through at least one of the wireless communication links; transmit uncompressed data of the at least one sensor through the at least one of the wireless communication links; and preprocess data of the at least one sensor and transmit the preprocessed data through the at least one of the wireless communication links. Based on selection, the controller 120 instructs the logical switch 122 to proceed with sending the data from sensor(s) 110 to be uncompressed 123, compressed, or preprocessed 124 before initiating transmission with transmitter 128. If the sensor data is preprocessed 124, then the controller 120 uses the logical switch 125 to control if the preprocessed data is transmitted as preprocessed data is or if the preprocessed data is compressed 126 before initiating transmission.

In some embodiments, the operation to preprocess 507 data of the at least one sensor and transmit the preprocessed data through the at least one of the wireless communication links, includes generating information characterizing features of objects sensed by the at least one sensor. The operation to preprocess 507 data also includes transmitting the information through the at least one of the wireless communication links.

In some embodiments, the operations can use Sounding Reference Signals (SRSs) to determine channel quality for SideLink (SL) communications. The operations can provide D2D SRS-based SL channel richness metric based on any of full covariance matrix, represented per resource block group or wideband, or channel directivity together with average path loss and/or frequency selectivity.

In some embodiments, the operations construct a delay-representing measure according to: TransferDelay[tu]_UE#ii_viaSL_toUE#jj = (Payload M / estimatedSLthp(UE#1-to-UE#1).

The estimatedSLthp may correspond to UE#ii (first device) estimated bitrate based on obtained D2D SRS from UE#jj (second device). The estimatedSLthp also may reflect capability reductions between a e/gNB and a D2D SL transmission from a thereof capable vehicle, such as available bandwidth for D2D SL transmissions, available device SL transmission power (and constraints thereto), and available beamforming schemes, or other entries listed in e.g. "UE Category" such as supported MIMO schemes, QAM constellation, etc.

In some embodiments, data transmitting nodes provide an estimate of performance expected with a next transmission based on estimates of threshold throughput with successful data transmissions in relation to environment, context, signal strength, etc. For example, the performance estimate may be based on collecting historical performance data which tracks the performance of the wireless communication links for earlier successful data transmissions and the related characteristics of the environment that were present, the related characteristics of the data that was transmitted (e.g., high varying bandwidth utilization versus relatively constant bandwidth utilization, etc.), and the related characteristics of the signal strength of the communication links through which the data was transmitted. The performance estimate is then estimated based on similarity of present characteristics of environment, data, and signal strength to the characteristics recorded in the historical performance data and the related tracked performance.

In some embodiments, the operation to determine 500 capacity of wireless communication links of the managed nodes includes determining a channel quality for SideLink (SL) communications based on an estimate of performance expected with a next transmission. The operation to determine 500 capacity of wireless communication links also includes determining a delay-optimal data sharing scheme defining sharing of the data of the at least one sensor from one of the managed nodes to an adjacent other one of the managed. The operation to determine 500 capacity of wireless communication links also includes determining a maximum packet size for transmissions of the data of the at least one sensor based on the determined channel quality and the determined delay-optimal data sharing scheme.

In some of the previous embodiments, the operation estimates performance expected with a next transmission includes collecting historical performance data which tracks the performance of the wireless communication links for earlier successful data transmissions and the related characteristics of the environment that were present, the related characteristics of the data that was transmitted, and the related characteristics of the signal strength of the communication links through which the data was transmitted. The operation to estimate performance expected with a next transmission also includes estimating the performance based on similarity of present characteristics of environment, data, and signal strength to the corresponding characteristics recorded in the historical performance data and the related tracked performance.

The operations can collect historical performance data which tracks the performance of the wireless communication links for earlier successful data transmissions and the related characteristics of the environment that were present, the related characteristics of the data that was transmitted, and the related characteristics of the signal strength of the communication links through which the data was transmitted. The operations can estimate the performance based on similarity of present characteristics of environment, data, and signal strength to the corresponding characteristics recorded in the historical performance data and the related tracked performance.

In some embodiments, operations include estimating time delay "cost" $X$ [tu] associated with transferring a known payload between two devices (vehicles) over a transverse communication (a.k.a. direct/SideLink link).

In some embodiments, the operation to determine 500 capacity of the wireless communication links of the managed nodes includes initiating transmission of sounding reference signals to the managed nodes. The operation to determine 500 capacity of the wireless communication links of the managed nodes also includes receiving from the managed nodes, channel quality metrics characterizing capacity of the wireless communication links of the managed nodes based on reception of the sounding reference signals by the managed nodes.

In some embodiments, the determination 500 of the capacity of wireless communication links of the managed nodes and the determination 502 of the data generation rate of the at least one sensor to be communicated through the wireless communication links, include estimating a compressed data transfer delay to compress the data of the at least one sensor at the data generation rate and transmit the compressed data through the at least one of the wireless communication links. The determination 500 of the capacity of wireless communication links and the determination 502 of the data generation rate also includes estimating an uncompressed data transfer delay to transmit the data at the data generation rate of the at least one sensor through the at least one of the wireless communication links. The determination 500 of the capacity of wireless communication links and the determination 502 of the data generation rate also includes estimating a preprocessed data transfer delay to preprocess the data at the data generation rate of the at least one sensor and transmit the preprocessed data through the at least one of the wireless communication links.

Additionally, in some embodiments, the selection 504 of the one of the following is based on a comparison of the compressed data transfer delay, the uncompressed data transfer delay, and the preprocessed data transfer delay includes compressing data of the at least one sensor before transmission through at least one of the wireless communication links. The selection 504 also includes transmitting uncompressed data of the at least one sensor through the at least one of the wireless communication links. The selection 504 also includes preprocessing data of the at least one sensor and transmit the preprocessed data through the at least one of the wireless communication links.

In some embodiments, the operations further include determining available processing resources of the managed nodes. The operations also further include determining requirements for processing data from the at least one sensor. The selection of one of the compressed data transfer delay, the uncompressed data transfer delay, and the preprocessed data transfer delay is based on the capacity of the wireless communication links of the managed nodes, the data generation rate of the at least one sensor, the available processing resources of the managed nodes, and the requirements for processing data from the at least one sensor.

The following is discussed in the context of vehicle-to-vehicle sensor data distribution.

Considering sensor raw data sharing among a set of vehicles enables true coordinated vehicle mobility (platooning) as individual vehicles can be regarded to act as more or less as one vehicle entity given proper sharing and synchronization of the sensor raw data.

Sharing of raw sensor data is rather time-critical and minimization delays between sensor data production and consumption becomes important; sharing raw sensor data over an air interface would benefit from some smallest amount of still relevant data to be conveyed. One solution thereof may include to compress raw data at some node to minimize transmission delay over air interface, but the full optimization scheme must consider possibilities of "sent uncompressed raw data" versus "compress and send compressed data and decompress it later" and so forth.

In that approach, the operations are tasked with managing distribution of sensor data among nodes in a jointly-operated set of vehicles; typically, to determine if data should be compressed onboard some specific vehicle in the fleet (given its and other vehicle relevant capabilities), transmitted over selected air interface steps, and later decompressed (and applied) to identify a device/node data management task scheme that provides an optimal delay budget for application of the data in respective data-consuming device/vehicles.

Some embodiments are directed to selecting a managing node 100 from among a group of managed nodes for operations to perform optimization and scheduling task may be performed by a managing node 100 located in some of the vehicles. In some embodiments, the operations further include communicating with a group of nodes that includes the managed nodes to select the managing node 100 from among the group of nodes and initiate operation of the selected node as the managing node 100 prior to the managing node 100 operating to control D2D communications of sensor data between the managed nodes.

In some of these embodiments, the selection of the managing node 100 from among the group of nodes includes selecting the node from among the group of nodes based on at least one of:

- comparison of data processing capabilities of the nodes;
- comparison of transmission interface capabilities of mobile ones of the nodes to other mobile ones of the nodes;
- comparison of transmission interface capabilities of mobile ones of the nodes to a non-mobile network node; and
- comparison of available power reserve of the nodes.

In some embodiments, the managing node 100 may also determine data use (or platooning) strategies considering involved vehicles sensor and processing and input/output (I/O) transmission capabilities and respective physical properties, such as instruct an identified device/vehicle to assume leading/trailing position, and/or instruct identified device/vehicle to assume certain mobility schemes (e.g. vehicle-vehicle minimal distance, velocity, etc., given vehicle sensor/processing/interface capability requirements greater than or less than thresholds, etc.).

In some embodiments, the managed nodes are vehicles traveling in a platoon. The operations further include generating platooning instructions for the managed nodes based on the capacity of wireless communication links of the managed nodes, types of sensors of the managed nodes, and available processing resources of the managed nodes. The operations further also include initiate transmission of the platooning instructions to the managed nodes.

In some of the embodiments, the platooning instructions instruct one of the vehicles to take a leading position relative to the other vehicles.

In some of the embodiments, the platooning instructions instruct one of the vehicles to maintain a defined following distance behind a leading other one of the vehicles and/or maintain a defined velocity.

As a result of the managing node 100 optimization process, individual vehicles may receive sensor data (compressed/uncompressed, or pre-processed) from a providing vehicle with as short delay as possible. In a further embodiment enabling individual vehicles to fulfill cluster operations target determined by managing node 100.

In some embodiments, the operation to determine the delay-optimal data sharing scheme defines the sharing of the data of the at least one sensor from the one of the managed nodes to the adjacent other one of the managed to provide a minimum delay.

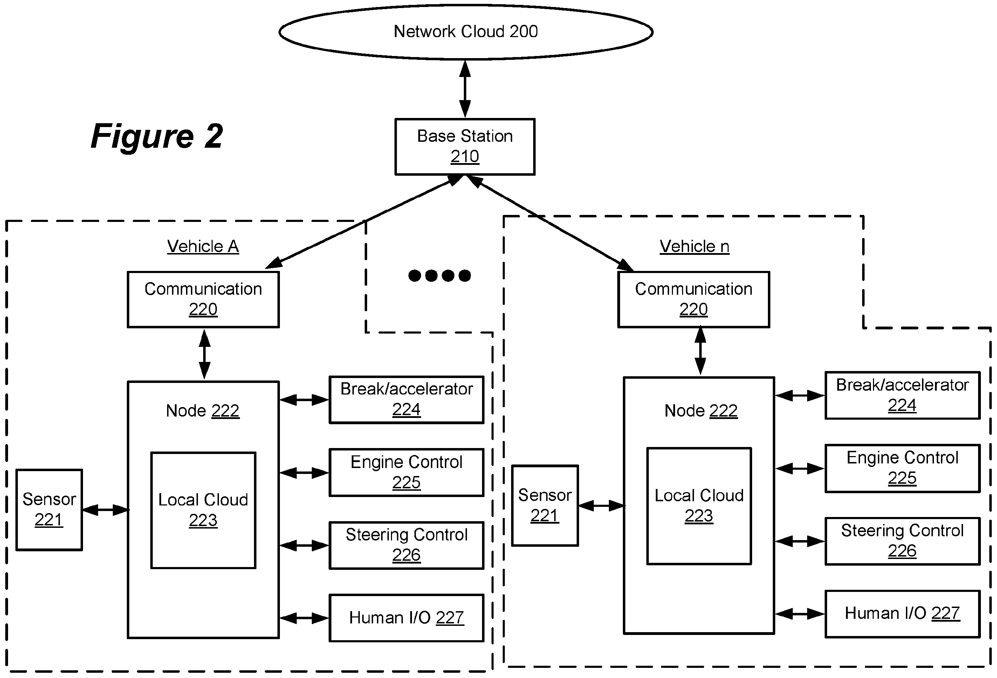

Figure 2 illustrates a block diagram of a plurality of vehicles configured to share sensor data in accordance with some embodiments of the present disclosure. The block diagram shows vehicles having on-board sensors outputting data that is available for distribution between vehicle under the control of the managing node 100.

Referring to Figure 2, vehicle A through vehicle n each include a communication device 220, at least one sensor 221, a break/accelerator 224, engine control 225, steering control 226, and human input output (I/O) all communicatively coupled and controllable by a node 222 of the vehicle. The node 222 stores executable instructions and/or data in the local cloud 223. One of the nodes 222 is determined to be the managing node 100 and the other nodes 222 are the managed nodes. The managing node communicates with the managed nodes through the base station 210 and the network cloud 200.

By way of a non-limiting example description of the solution illustrated in Figure 2, the example assumes a set of five vehicles A-E that communicate only to their nearest in-line neighboring vehicle(s). In other words, data of at least one sensor is transmitted compressed, uncompressed, or preprocessed from vehicle A to vehicle B, from vehicle B to vehicle C, from vehicle C to vehicle D, and from vehicle D to vehicle E, or vice versa. Sensor data sharing over an eMBB/gNB/cloud connection is not considered in this scenario. The sensor rendering considered data is assumed to be located in vehicle A, for example as front-facing LiDAR sensor, and is sequentially propagate to Vehicle E through multiple hops.

The sensor producing data is assumed to be located in vehicle A and propagates through multiple hops to Vehicle E. The transfer delay is considered in some generic and appropriate denoted time unity [tu]. There are different packing/unpacking schemes as well as packing/unpacking instances along a vehicle cluster, and the optimization challenge is to determine the respective actions-locations so that we obtain a shortest possible time delay between data production and consumption (i.e. application) thereof that is shorter than transmission of raw data between the production/application points.

Uncompressed sensor data may be transferred between two vehicles costing a delay of X [tu], and after selected data compression action (a process consuming time Y [tu]) a smaller set of data may be transferred at a cost of $\alpha \cdot X$ [tu] (where $\alpha < 1$). Decompression of the previously compressed data is assumed to cause a Z [tu] delay before made use thereof. In practice, some encoding-decoding schemes may be rather unbalanced in the aspect that encoding is fast whereas decoding is timewise expensive; this would imply e.g. Y [tu] < Z [tu] (or even Y [tu] << Z [tu]).

A generic in-device/on-vehicle general processing delay of p [tu] is also assumed.

All above entities may be given a sub-index a..e that denotes its corresponding belonging to the vehicle A..E, respectively.

As a very conceptual exemplification of the optimization task assuming thresholdee device A, B and C, the managing node 100 has to determine the minimum delay for a set of sensor data to go from A to C. In that, we have a set of executions schemes to find the minimum for, according to:

for device A, there are the possibilities that:

- (A sends raw data to B), OR
- (A sends raw data to C), OR
- (A compresses data and sends compressed data to B), and
- (A compresses data and sends compressed data to C);

for device B, there are the possibilities that:

- (B receives raw data from A and sends raw data to C), OR
- (B receives raw data from A and compresses and sends compressed data to C), OR
- (B receives compressed data from A and sends compressed data to C), OR
- (B receives compressed data from A and decompresses and sends uncompressed data to C); and

for device C, there are the possibilities that:

- (C receives raw data from A), OR
- (C receives raw data from B), OR
- (C receives compressed data from A and decompresses (and uses)), and
- (C receives compressed data from B and decompresses (and uses)).

Optimization is based on determining what constellation above that brings raw data from A to C with the shortest delay, i.e. determine a scheme that describes which device to execute what data processing/transmission task in order to end up with the best possible A-to-C delay.

We notice that the structure of transmission A-B and A direct to C are principally equal, but with the (understood) difference that physical distance between A-C may be significantly longer than A-B and thus that the associated link performance (implicitly transfer delay X[tu]) for the A-C transmission may be worse.

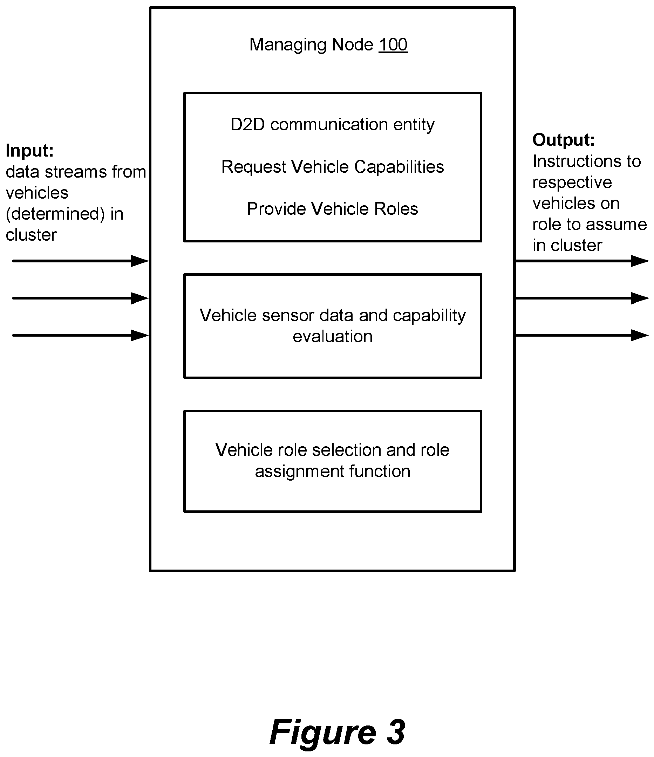

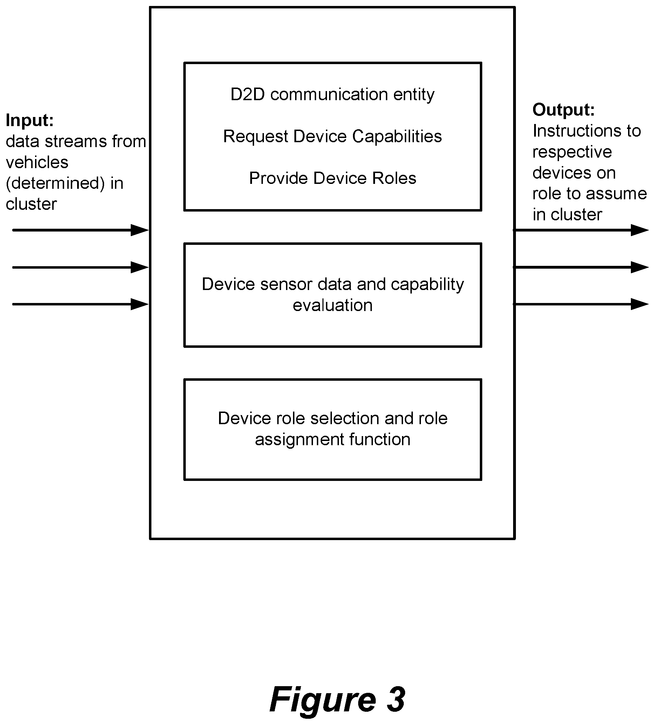

The managing node 100 in Figure 1 may be described with functionality and internal structure according to Figure 3.

Figure 3 illustrates a block diagram which illustrates operational components of a managing node for evaluating and/or determining roles of a cluster of vehicles in accordance with some embodiments of the present disclosure. Data streams from vehicles in clusters are input into the managing node 100. The inputs are then used by different functionality and internal structures to output instructions to respective vehicles on roles to assume in the clusters. The functionality and internal structures include D2D communication entity, requesting vehicle capabilities, providing vehicle roles, vehicle sensor data and capability evaluation, and vehicle role selection and role assignment function. The D2D communication entity may include requesting and establishing vehicle cluster constellation attributes (e.g., order: leading, second, .... last) and respective capabilities. Requesting vehicle capabilities may include sensor data attribute (e.g., payload) processing capability, transmit and receive (TX/RX) interface capability, and D2D channel characteristics. Providing vehicle roles may include providing information of vehicle's compression/decompression role in cluster according to selection principles for respective vehicles in the vehicle cluster, and a duration of the assigned role. Vehicle sensor data and capability evaluation may include obtaining processing capability, TX/RX interface capability, and/or D2D channel characteristics from an RDC. Vehicle sensor data and capability evaluation may also include calculating an estimated transfer delay "x[tu]" for respective D2D steps, an estimated transfer delay "a·X [tu]" for respective D2D steps associated with transfer of compressed data, and equations discussed below. Vehicle role selection and role assignment function may include determining (optimal) vehicle location in the cluster for data compression and/or decompression.

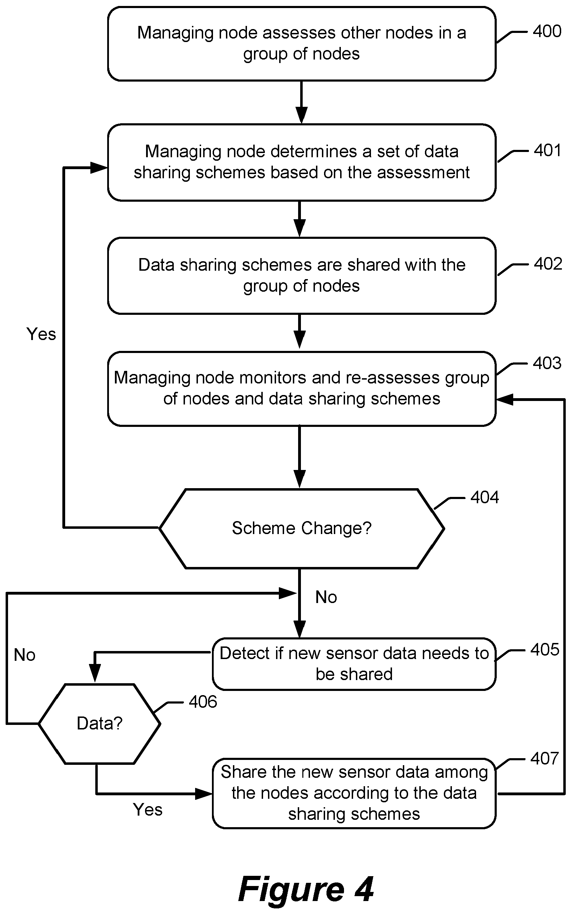

The process flow for the outlined managing node 100 optimization task is further demonstrated in Figure 4.

Figure 4 illustrates a flowchart of operations that can be performed by a managing node 100 in accordance with some embodiments of the present disclosure.

As illustrated in to Figure 4, in Step 400, the managing node 100 assesses other nodes in a group of nodes. Then in Step 401, the managing node 100 determines a set of data sharing schemes based on the assessment. Then in Step 402, data sharing schemes are shared with the group of nodes. Then in Step 403, the managing node 100 monitors and re-assesses group of nodes and data sharing schemes. Then in decision Step 404, the managing node 100 determines if there has been a scheme change. If the scheme changed, then Steps 401-404 are repeated. If the scheme has not changed, in Step 405, detect if new sensor data needs to be shared. In Step 406, if new sensor data needs to be shared, then share the new sensor data among the nodes according to the data sharing schemes in Step 407 and perform Steps 403-404 again. If new sensor data does not need to be shared, then Step 405-406 are repeated.

Next, determining rules for vehicles how to handle sensor data compression/decompression and transmission thereof is discussed.

Depending on capabilities of available transmission links between sensors, actuators and/or individual processing nodes (i.e. vehicles), it may be beneficial to compress or in selected manners pre-process sensor raw data from a leading vehicle before sending it to targeted receivers.

One typical aspect can be that the wireless link between sensor A and actuator B only can fulfill the required transmission delay given a maximum packet size for the transmit data.

A useful approach would then be to compress the raw data so that requirement on maximum packet size can be met. This means that the processing time for data compression must be included into the total sensor-to-actuator delay budget. In this, compression time, the buffer size (in time) for each sensor should also be included. There might exist multiple settings depending on the sensor, for different delay demands and data bandwidth. Usually, the compression is higher if one is allowed to have a larger aggregation window but that also increases the delay. With very small window sizes, the compression probably gets worse and the overhead (data headers, etc.) per packet increases, but one might end up with lower delay since there is shorter wait time until the buffer is full.

With a raw data compression step, there also comes a decompression to revert the compression, and likewise the processing time for decompression must also be included in the total sensor-to-actuator delay budget.

For further discussions, we may assume that the managing node 100 (vehicle) is identified and that the intrinsic (at least initial) vehicle order in the platoon somehow is established.

In a first step, it is assumed that compression is executed at the node (i.e. vehicle) handling the sensor (or by/in the sensor itself) and that the corresponding decompression is located at the receiving end; then the respective application manager must consider compression/decompression execution times and corresponding in-between transmission delay

Again, for the sake of describing the solution illustrated in Figure 2, we consider a set of five vehicles A-E that are assumed to communicate only to its in-one-step-aside neighboring vehicle(s). In other words, data of at least one sensor is transmitted compresses, uncompressed, or preprocessed from vehicle A to vehicle B, from vehicle B to vehicle C, from vehicle C to vehicle D, from vehicle D to vehicle E, and vice versa.

In one example, a delay associated with sensor data in vehicle A shared and made use of in vehicle E. With five vehicles in series and assuming uniform transfer delays between respective vehicles, the total transfer delay between A-E equals 4x X [time units] (i.e. the worst case).

In the example, Vehicle A is the lead vehicle and has one or more sensors which produce high bandwidth data (e.g., Lidar, radar, optical cameras, etc.). The sensor data from Vehicle A should be compressed before relay to the other Vehicles B-E platooning with Vehicle A. Vehicle A can be the controlling node that is responsible for assigning roles to the other vehicles as to who is responsible for data compression and who is to receive the compressed data in view of being able to decompress data. Vehicle A can poll or otherwise receive capability information from the other vehicles which indicates their available capabilities for compressing and/or decompressing communications. The capability information may indicate what compression and/or decompression algorithms are available, available processing resources, available memory resources, etc.

Vehicle A does not have sufficient processing power (i.e. not available on-board the receiving vehicle) to compress the sensor data. However, Vehicle A determines that the required compression capability is present in next vehicle (i.e. in Vehicle B) and that relevant decompressing capabilities are present in the last Vehicle E that also has the intention to make use of the decompressed data for actuator purposes. Further we make the simplistic assumption that the delay due to data transfer is identical for each hop in the communication chain.

Then, the managing node 100 may determine that first vehicle passes on the uncompressed data to Vehicle B, and passed further, given that a processing-transfer evaluation metric is fulfilled. In this example the delay associated with uncompressed data from sensor in vehicle A which is transferred to vehicle B. Then the uncompressed data is compressed at vehicle B (consuming time Y [time units]). The compressed data at vehicle B is further transferred, assuming $\alpha \cdot X$ [tu] delay at each transfer, from vehicle B to vehicle C, from vehicle C to vehicle D, and from vehicle D to vehicle E. Then the compressed data at vehicle E is decompressed in vehicle E at time cost of Z [tu]. Then the decompressed data is applied to an actuator. Accordingly, the processing-transfer evaluation metric may be expressed according to:

$$X + Y + \alpha \cdot X + \alpha \cdot X + \alpha \cdot X + Z \leq 4 \cdot X$$

Alternatively, with the same assumptions on head/tail vehicles, but assuming more vehicles in-between (i.e. considering n vehicles in the platoon), the processing-transfer evaluation metric may be expressed according to:

$$X + Y + (n - 2) \cdot \alpha \cdot X + Z \leq (n - 1) \cdot X$$

Then if the above inequality is true, the platoon has a delay-vice benefit from compressing data in one vehicle. This delay-vice benefit from compressing data in one vehicle may further be intuitively justified considering that the respective time costs for compression/decompression are reclaimed as the number vehicles increases and a vehicle-vehicle transfer time saving of $(1 - \alpha) \cdot X$ is achieved. The benefit also increases with high compression (i.e. $\alpha \ll 1$).

In a more elaborate example, the managing node 100 may consider and evaluate a scenario where neither a first nor second vehicle has compression capabilities, but a third has compression capabilities. Also assuming the rest of the tailing part to resemble previous examples.

For the sake of describing the solution illustrated in Figure 2, we consider a set of n vehicles A-n that are assumed to communicate only to its in-one-step-aside neighboring vehicle(s). In this example the delay associated with uncompressed data from sensor in vehicle A which is transferred to vehicle B. Then the uncompressed data transferred from vehicle B to vehicle C, where uncompressed data is compressed at vehicle C (consuming time Y [time units]). The compressed data at vehicle C is transferred, assuming $\alpha \cdot X$ [tu] delay at each transfer, from vehicle C to vehicle D, from vehicle D to vehicle E, and repeated until the compressed data is transferred to vehicle n. Then the compressed data at vehicle n is decompressed in vehicle n at a time cost of Z [tu]. Then the decompressed data is applied to the actuator.

Accordingly, the processing-transfer evaluation metric may be expressed according to:

$$m \cdot X + Y + (n - m - 1) \cdot \alpha \cdot X + Z \leq (n - 1) \cdot X$$

Here, *m* equals number of transferring uncompressed steps and *n* the total number of vehicles.

Furthermore, in an example where the decompression is executed in some vehicle before the final vehicle, the processing-transfer evaluation metric may be expressed according to:

$$m1 \cdot X + (n - m1 - m2 - 1) \cdot \alpha \cdot X + Y + Z \leq (n - 1) \cdot X$$

Here, *m1* equals a number of transferring uncompressed steps, *m2* equals a number of uncompressed transfer steps in the end of the platoon (i.e. before receiving vehicle), and n equals the total number of vehicles.

In a more generic example, the managing node 100 may have a multi-dimensional optimization problem to optimize. In this example assume some on-vehicle general processing delay pi as well as per-link unique transfer delays Xij (i.e. Xab, Xbc, etc.) which may represent a potential use of either eNB or D2D-terminated accesses, as well as per-vehicle individual compression and decompression delays, Yi and Zi, respectively.

Considering examples where the decompression step no longer resides in the final vehicle, but in any preceding vehicle, still assuming compression in vehicle A, the inequality is:

$$(pa + Ya + \alpha \cdot Xab) + (pb + \alpha \cdot Xbc) + (pc + \alpha \cdot Xcd) + (pd + \alpha \cdot Xde) + (pe + Ze)$$
$$\leq \sum pi + \sum Xij$$

$$(pa + Ya + \alpha \cdot Xab) + (pb + \alpha \cdot Xbc) + (pc + \alpha \cdot Xcd) + (pd + Zd + Xde) + (pe)$$
$$\leq \sum pi + \sum Xij$$

$$(pa + Ya + \alpha \cdot Xab) + (pb + \alpha \cdot Xbc) + (pc + Zc + Xcd) + (pd + Xde) + (pe)$$
$$\leq \sum pi + \sum Xij$$

$$(pa + Ya + \alpha \cdot Xab) + (pb + Zb + \alpha \cdot Xbc) + (pc + Xcd) + (pd + Xde) + (pe)$$
$$\leq \sum pi + \sum Xij$$

Additionally, the set of inequalities corresponding to the compression residing in Vehicle B, whilst decompression is assumed in any of the preceding vehicles, may be represented as:

$$(pa + Xab) + (pb + Yb + \alpha \cdot Xbc) + (pc + \alpha \cdot Xcd) + (pd + \alpha \cdot Xde) + (pe + Ze)$$
$$\leq \sum pi + \sum Xij$$

$$(pa + Xab) + (pb + Yb + \alpha \cdot Xbc) + (pc + \alpha \cdot Xcd) + (pd + Zd + Xde) + (pe)$$
$$\leq \sum pi + \sum Xij$$

$$(pa + Xab) + (pb + Yb + \alpha \cdot Xbc) + (pc + Zc + Xcd) + (pd + Xde) + (pe)$$
$$\leq \sum pi + \sum Xij$$

Additionally, the set of inequalities with data compression residing in Vehicle C, whilst decompression is assumed in any of the preceding vehicles of the last one, may be represented as:

$$(pa + Xab) + (pb + Xbc) + (pc + Yc + \alpha \cdot Xcd) + (pd + \alpha \cdot Xde) + (pe + Ze) \leq \sum pi + \sum Xij$$

$$(pa + Xab) + (pb + Xbc) + (pc + Yc + \alpha \cdot Xcd) + (pd + Zd + Xde) + (pe) \leq \sum pi + \sum Xij$$

Additionally, a final basic example with data compression residing in Vehicle D, may be represented as:

$$(pa + Xab) + (pb + Xbc) + (pc + Xcd) + (pd + Yd + \alpha \cdot Xde) + (pe + Ze)$$
$$\leq \sum pi + \sum Xij$$

Then, when finding the optimal location for the data compression/decompression the managing node 100 must identify at least one of the equalities above inequalities being true.

Then, in some embodiments, further operations include determining which permutation of the vehicles A-D that provides optimal processing-compression-decompression transmission delay arrangement. The same set of inequalities may be used but with respective indexes interchanged ranging the set of 24 {a,b,c,d} permutations.

Next, aspects of different data compression schemes with respect to compression rate and time constraints in data application is discussed.

In some embodiments, assume there may be different compression to compression-time ratios.

In some embodiments, a two-step compression scheme may be included where one step may consider applying a decent compression with high computational (times-wise) efficiency to target some recipient vehicles with high time constraints, and in a second step applying a more efficient decent data compression algorithm that may take some larger amount of time to complete targeting other recipient vehicles with less strict time constraints.

Likewise, depending on compression algorithm, it is assumed that decompression time associated with the different compression schemes will differ too.

In the end, a managing node 100 may, depending in considered nodes computational power, associated interfaces, time constraints, etc., consider more than one compression/decompression scheme to identify an optimal (shortest) total delay.

In some embodiments, the operation to compress 505 data of the at least one sensor before transmission through at least one of the wireless communication links includes compressing the data of the at least one sensor to output lower compressed data. The operation to compress 505 data also includes compressing the data of the at least one sensor to output higher compressed data, wherein the lower compressed data has a low compression ratio and less computational requirement for decompression than the higher compressed data. The operation to compress 505 data also includes identifying a first set of at least one of the managed nodes to receive the lower compressed data based on available processing resources of the first set of at least one of the managed nodes. The operation to compress 505 data also includes identifying a second set of at least one of the managed nodes to receive the higher compressed data based on available processing resources of the second set of at least one of the managed nodes. The operation to compress 505 data also includes transmitting the lower compressed data to the first set of at least one of the managed nodes. The operation to compress 505 data also includes transmitting the higher compressed data to the second set of at least one of the managed nodes.

Next, aspects of in-selected device/vehicle pre-processing depending on other vehicle impaired capabilities are discussed.

The managing node 100 residing in some determined capable vehicle may, based on obtained other vehicles processing capabilities report in some initial capability exchange step, determine that a certain vehicle lacks certain processing capabilities. Examples of processing capabilities which vehicles may lack may include: processing capability to convert a lidar pointcloud into a physical environment representation; processing capability associated with a camera rendered media stream related to object detection into a physical environment representation; and interface to receive any raw sensor data.

Based on above determined available processing capability (non-present capability, incapability, etc.) managing node 100 selects data manipulation actions (i.e. pre-processing) for the individual vehicle less capable/impaired vehicles other than data compression or decompression.

Next, aspects of considering stability of link-delay estimation are discussed.

In a previous step of estimating the node-node transfer delay TransferDelay[tu]_(in equations denoted as X [tu]), according to TransferDelay[tu]_UE#ii_viaSL_toUE#jj = (Payload M / estimatedSLthp(UE#1-to-UE#1).

The estimatedSLthp may correspond to UE#ii (first device) estimated bitrate based on obtained D2D SRS from UE#jj (second device). The estimatedSLthp also may reflect capability reductions between a e/gNB and a D2D SL transmission from a thereof capable vehicle, such as available bandwidth for D2D SL transmissions, available device SL transmission power (and constraints thereto), and e.g. available beamforming schemes, or other entries listed in e.g. "UE Category" such as supported MIMO schemes, QAM constellation, etc.

Then, the managing node 100 may consider historical data for previous (in terms of previous link usage time, amount of data conveyed over link, use context, considered serving communication nodes (gNB, WiFi APs, etc.), vehicle speed, etc,) to establish e.g. an average X [tu] value and associated variance, a time coherence value indicating how long the link is considered stable, etc.

In a further related embodiment, X [tu]), may be given one typical mean_value1 and an associated +/- variance_value1 during the expected coherence time for the link, and another mean_value2 and an associated +/- variance_value2 (where variance_value2 > variance_value1) to apply in a link -se time period occurring outside the estimated link coherence time.

Next, aspects of locality of the managing node 100 are discussed.

It has been assumed that managing node 100 is located in some of the vehicles in the cluster, but some embodiments relate to other relevant approaches to the location of the managing node 100.

In one embodiment, individual devices/vehicles may in initial steps (and periodically) provide an out-of-band node with interface and node processing capability information. The out-of-band node may then in a later instruction/task allocation step provide individual devices/vehicles with what-to-do instructions. The information may be provided/obtained over regular eMBB UL/DL interfaces. In this paradigm, devices/vehicles are instructed "what to do and" from a central node, whereas uncompressed/compressed sensor data is shared directly between the devices/vehicles.

In another embodiment, responsibility of "managing node 100" may be distributed among a set of participating devices, for example considering token ring of record, or similar.

In a further embodiment, we may accommodate a two-step compression scheme where one step may consider applying a decent compression with high computational (times-wise) efficiency to target some recipient vehicles with high time constraints, and in a second step applying a more efficient decent data compression algorithm that may take some larger amount of time to complete targeting other recipient vehicles with less strict time constraints.

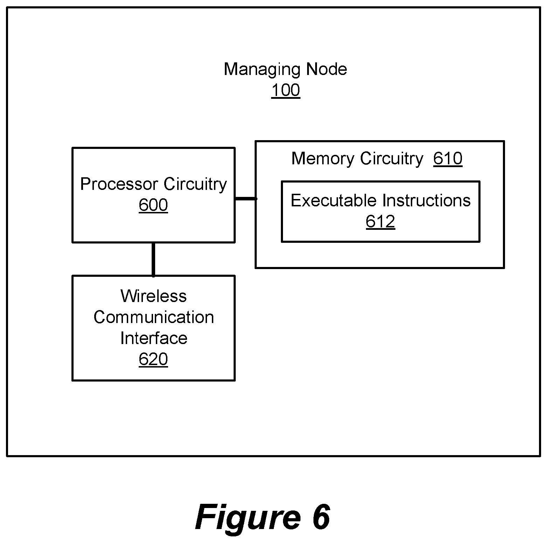

Figure 6 is a block diagram of components of a managing node 100 that are configured to operate in accordance with some embodiments of the present disclosure. The managing node 100 can include at least one processor circuit 600 (processor), at least one memory 610 (memory), and at least one wireless communication interface 620 (network interface). The processor 600 is operationally connected to these various components. The memory 610 stores executable instructions 612 that are executed by the processor 600 to perform operations. The processor 600 may include one or more data processing circuits, such as a general purpose and/or special purpose processor (e.g., microprocessor and/or digital signal processor), which may be collocated or distributed across one or more data networks. The processor 600 is configured to execute the instructions 612 in the memory 610, described below as a computer readable medium, to perform some or all of the operations and methods for one or more of the embodiments disclosed herein for a managing node 100. As explained above, the managing node 100 may be separate from and communicatively connect to the managed nodes of vehicles, user devices, and/or roadside infrastructure, or may be at least partially integrated within one or more of the managed nodes of vehicles, user devices, and/or roadside infrastructure.

Further Definitions and Embodiments:

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the appended examples of embodiments are intended to cover all such modifications, enhancements, and other embodiments, which fall within the scope of present inventive concepts. Thus, to the maximum extent allowed by law, the scope of present inventive concepts are to be determined by the appended claims.

**Claims**

1. A managing node (100) for controlling device-to-device, D2D,

   communications of sensor data between managed nodes of vehicles (222), user devices, and/or roadside infrastructure, the managing node configured to perform operations to:

   determine capacity of wireless communication links of the managed nodes;
   determine data generation rate of at least one sensor to be communicated through the wireless communication links;
   select one of the following based on the capacity of the wireless communication links and the data generation rate:

   compress data of the at least one sensor before transmission through at least one of the wireless communication links,
   transmit uncompressed data of the at least one sensor through the at least one of the wireless communication links, and
   preprocess data of the at least one sensor and transmit the preprocessed data through the at least one of the wireless communication links, wherein the operation to preprocess data of the at least one sensor and transmit the preprocessed data through the at least one of the wireless communication links, comprises:

   generate information characterizing features of objects sensed by the at least one sensor; and
   transmit the information through the at least one of the wireless communication links; and

   initiate performance of the selection.

2. The managing node (100) of any of Claim 1, wherein the operation to determine capacity of the wireless communication links of the managed nodes, comprises:

   initiate transmission of sounding reference signals to the managed nodes; and

receive from the managed nodes, channel quality metrics characterizing capacity of the wireless communication links of the managed nodes based on reception of the sounding reference signals by the managed nodes.

3. The managing node (100) of any of Claims 1 to 2,

wherein the determination of the capacity of wireless communication links of the managed nodes and the determination of the data generation rate of the at least one sensor to be communicated through the wireless communication links, comprises to:

estimate a compressed data transfer delay to compress the data of the at least one sensor at the data generation rate and transmit the compressed data through the at least one of the wireless communication links;
estimate an uncompressed data transfer delay to transmit the data at the data generation rate of the at least one sensor through the at least one of the wireless communication links; and
estimate a preprocessed data transfer delay to preprocess the data at the data generation rate of the at least one sensor and transmit the preprocessed data through the at least one of the wireless communication links, and

wherein the selection of one of the following is based on a comparison of the compressed data transfer delay, the uncompressed data transfer delay, and the preprocessed data transfer delay includes to:

compress data of the at least one sensor before transmission through at least one of the wireless communication links;
transmit uncompressed data of the at least one sensor through the at least one of the wireless communication links; and
preprocess data of the at least one sensor and transmit the preprocessed data through the at least one of the wireless communication links.

4. The managing node (100) of any of Claims 1 to 3, wherein the operations further comprise:

determine available processing resources of the managed nodes;
determine requirements for processing data from the at least one sensor, and
wherein the selection of one of the following is based on the capacity of the wireless communication links of the managed nodes, the data generation rate of the at least one sensor, the available processing resources of the managed nodes, and the requirements for processing data from the at least one sensor:

compress data of the at least one sensor before transmission through at least one of the wireless communication links;
transmit uncompressed data of the at least one sensor through the at least one of the wireless communication links; and
preprocess data of the at least one sensor and transmit the preprocessed data through the at least one of the wireless communication links.

5. The managing node (100) of any of Claims 1 to 4, wherein the operations further comprise:
prior to the managing node (100) operating to control D2D communications of sensor data between the managed nodes, communicating with a group of nodes that includes the managed nodes to select the managing node (100) from among the group of nodes and initiate operation of the selected node as the managing node (100).

6. The managing node (100) of any of Claims 1 to 5, wherein the operation to determine capacity of wireless communication links of the managed nodes comprises:

determine a channel quality for SideLink, SL, communications based on an estimate of performance expected with a next transmission;
determine a delay-optimal data sharing scheme defining sharing of the data of the at least one sensor from one of the managed nodes to an adjacent other one of the managed; and
determine a maximum packet size for transmissions of the data of the at least one sensor based on the determined channel quality and the determined delay-optimal data sharing scheme.

7. The managing node (100) of Claim 6, wherein the operation to determine the delay-optimal data sharing scheme defines the sharing of the data of the at least one sensor from the one of the managed nodes to the adjacent other one of the managed to provide a minimum delay.

8. A method performed by a managing node for controlling device-to-device (D2D) communications of sensor data between managed nodes of vehicles, user devices, and/or roadside infrastructure, the method comprising:

   determining (500) capacity of wireless communication links of the managed nodes;
   determining (502) data generation rate of at least one sensor to be communicated through the wireless communication links;
   selecting (504) one of the following based on the capacity of the wireless communication links and the data generation rate:

   compressing (505) data of the at least one sensor before transmission through at least one of the wireless communication links,
   transmitting (506) uncompressed data of the at least one sensor through the at least one of the wireless communication links, and
   preprocessing (507) data of the at least one sensor and transmit the preprocessed data through the at least one of the wireless communication links, wherein the preprocessing (507) data of the at least one sensor and transmit the preprocessed data through the at least one of the wireless communication links, comprises:

   generating information characterizing features of objects sensed by the at least one sensor; and
   transmitting the information through the at least one of the wireless communication links; and

   initiating (508) performance of the selection.

9. The method of any of Claim 8, wherein the determining (500) capacity of the wireless communication links of the managed nodes, comprises:

   initiating transmission of sounding reference signals to the managed nodes; and
   receiving from the managed nodes, channel quality metrics characterizing capacity of the wireless communication links of the managed nodes based on reception of the sounding reference signals by the managed nodes.

10. The method of any of Claims 8 to 9,

   wherein the determination (500) of the capacity of wireless communication links of the managed nodes and the determination of the data generation rate of the at least one sensor to be communicated through the wireless communication links, comprises to:

   estimating a compressed data transfer delay to compress the data of the at least one sensor at the data generation rate and transmit the compressed data through the at least one of the wireless communication links;
   estimating an uncompressed data transfer delay to transmit the data at the data generation rate of the at least one sensor through the at least one of the wireless communication links; and
   estimating a preprocessed data transfer delay to preprocess the data at the data generation rate of the at least one sensor and transmit the preprocessed data through the at least one of the wireless communication links, and

   wherein selecting (504) one of the following is based on a comparison of the compressed data transfer delay, the uncompressed data transfer delay, and the preprocessed data transfer delay:

   compressing data of the at least one sensor before transmission through at least one of the wireless communication links;
   transmitting uncompressed data of the at least one sensor through the at least one of the wireless communication links; and
   preprocessing data of the at least one sensor and transmit the preprocessed data through the at least one of the wireless communication links.

EP 4 578 174 B1

11. The method of any of Claims 8 to 10, further comprising:

determining available processing resources of the managed nodes;
determining requirements for processing data from the at least one sensor, and
wherein selecting one of the following is based on the capacity of the wireless communication links of the managed nodes, the data generation rate of the at least one sensor, the available processing resources of the managed nodes, and the requirements for processing data from the at least one sensor:

compressing data of the at least one sensor before transmission through at least one of the wireless communication links;
transmitting uncompressed data of the at least one sensor through the at least one of the wireless communication links; and
preprocessing data of the at least one sensor and transmit the preprocessed data through the at least one of the wireless communication links.

12. The method of any of Claims 8 to 11, further comprising:
prior to controlling D2D communications of sensor data between the managed nodes, communicating with a group of nodes that includes the managed nodes to select the managing node from among the group of nodes and initiate operation of the selected node as the managing node.

13. The method of any of Claims 8 to 12, wherein the determining (500) capacity of wireless communication links of the managed nodes comprises:

determining a channel quality for SideLink, SL, communications based on an estimate of performance expected with a next transmission;
determining a delay-optimal data sharing scheme defining sharing of the data of the at least one sensor from one of the managed nodes to an adjacent other one of the managed; and
determining a maximum packet size for transmissions of the data of the at least one sensor based on the determined channel quality and the determined delay-optimal data sharing scheme.

14. The method of Claim 13, wherein determining the delay-optimal data sharing scheme defines the sharing of the data of the at least one sensor from the one of the managed nodes to the adjacent other one of the managed to provide a minimum delay.

**Patentansprüche**

1. Verwaltungsknoten (100) zum Steuern von Gerät-zu-Gerät-, D2D-, Kommunikationen von Sensordaten zwischen verwalteten Knoten von Fahrzeugen (222), Benutzervorrichtungen und/oder Straßenrandinfrastruktur, wobei der Verwaltungsknoten so konfiguriert ist, dass er Vorgänge durchführt, um:

die Kapazität von drahtlosen Kommunikationsverbindungen der verwalteten Knoten zu bestimmen;
die Datenerzeugungsrate mindestens eines Sensors, die über die drahtlosen Kommunikationsverbindungen kommuniziert werden soll, zu bestimmen;
auf Grundlage der Kapazität der drahtlosen Kommunikationsverbindungen und der Datenerzeugungsrate eines der Folgenden auszuwählen:

Daten des mindestens einen Sensors vor Übertragung über mindestens eine der drahtlosen Kommunikationsverbindungen zu komprimieren,
unkomprimierte Daten des mindestens einen Sensors über die mindestens eine der drahtlosen Kommunikationsverbindungen zu übertragen, und
Daten des mindestens einen Sensors vorzuverarbeiten und die vorverarbeiteten Daten über die mindestens eine der drahtlosen Kommunikationsverbindungen zu übertragen, wobei der Vorgang, um Daten des mindestens einen Sensors vorzuverarbeiten und die vorverarbeiteten Daten über die mindestens eine der drahtlosen Kommunikationsverbindungen zu übertragen, umfasst:

Informationen zu erzeugen, die Merkmale von Objekten charakterisieren, welche von dem mindestens einen Sensor erfasst werden; und

die Informationen über die mindestens eine der drahtlosen Kommunikationsverbindungen zu übertragen; und

Durchführung der Auswahl zu initiieren.

2. Verwaltungsknoten (100) nach Anspruch 1, wobei der Vorgang, um die Kapazität der drahtlosen Kommunikationsverbindungen der verwalteten Knoten zu bestimmen, umfasst:

Übertragung von Sondierungsreferenzsignalen an die verwalteten Knoten zu initiieren; und
auf Grundlage des Empfangs der Sondierungsreferenzsignale durch die verwalteten Knoten Kanalqualitätsmetriken von den verwalteten Knoten zu empfangen, die die Kapazität der drahtlosen Kommunikationsverbindungen der verwalteten Knoten charakterisieren.

3. Verwaltungsknoten (100) nach einem der Ansprüche 1 bis 2, wobei die Bestimmung der Kapazität von drahtlosen Kommunikationsverbindungen der verwalteten Knoten und die Bestimmung der Datenerzeugungsrate des mindestens einen Sensors, die über die drahtlosen Kommunikationsverbindungen kommuniziert werden soll, umfasst:

eine Transferverzögerung von komprimierten Daten zu schätzen, um die Daten des mindestens einen Sensors mit der Datenerzeugungsrate zu komprimieren und die komprimierten Daten über die mindestens eine der drahtlosen Kommunikationsverbindungen zu übertragen;
eine Transferverzögerung von unkomprimierten Daten zu schätzen, um die Daten mit der Datenerzeugungsrate des mindestens einen Sensors über die mindestens eine der drahtlosen Kommunikationsverbindungen zu übertragen; und
eine Transferverzögerung von vorverarbeiteten Daten zu schätzen, um die Daten mit der Datenerzeugungsrate des mindestens einen Sensors vorzuverarbeiten und die vorverarbeiteten Daten über die mindestens eine der drahtlosen Kommunikationsverbindungen zu übertragen, und
wobei die Auswahl einer der Folgenden auf einem Vergleich der Transferverzögerung von komprimierten Daten, der Transferverzögerung von unkomprimierten Daten und der Transferverzögerung von vorverarbeiteten Daten basiert und Folgendes einschließt:

Daten des mindestens einen Sensors vor Übertragung über mindestens eine der drahtlosen Kommunikationsverbindungen zu komprimieren;
unkomprimierte Daten des mindestens einen Sensors über die mindestens eine der drahtlosen Kommunikationsverbindungen zu übertragen; und
Daten des mindestens einen Sensors vorzuverarbeiten und die vorverarbeiteten Daten über die mindestens eine der drahtlosen Kommunikationsverbindungen zu übertragen.

4. Verwaltungsknoten (100) nach einem der Ansprüche 1 bis 3, wobei die Vorgänge weiter umfassen:

verfügbare Verarbeitungsressourcen der verwalteten Knoten zu bestimmen;
Anforderungen für das Verarbeiten von Daten von dem mindestens einen Sensor zu bestimmen, und
wobei die Auswahl einer der Folgenden auf der Kapazität der drahtlosen Kommunikationsverbindungen der verwalteten Knoten, der Datenerzeugungsrate des mindestens einen Sensors, den verfügbaren Verarbeitungsressourcen der verwalteten Knoten und den Anforderungen für das Verarbeiten von Daten von dem mindestens einen Sensor basiert:

Daten des mindestens einen Sensors vor Übertragung über mindestens eine der drahtlosen Kommunikationsverbindungen zu komprimieren;
unkomprimierte Daten des mindestens einen Sensors über die mindestens eine der drahtlosen Kommunikationsverbindungen zu übertragen; und
Daten des mindestens einen Sensors vorzuverarbeiten und die vorverarbeiteten Daten über die mindestens eine der drahtlosen Kommunikationsverbindungen zu übertragen.

5. Verwaltungsknoten (100) nach einem der Ansprüche 1 bis 4, wobei die Vorgänge weiter umfassen:
bevor der Verwaltungsknoten (100) tätig wird, um D2D-Kommunikationen von Sensordaten zwischen den verwalteten Knoten zu steuern, Kommunizieren mit einer Gruppe von Knoten, welche die verwalteten Knoten einschließt, um den Verwaltungsknoten (100) aus der Gruppe von Knoten auszuwählen und Tätigkeit des ausgewählten Knotens als Verwaltungsknoten (100) zu initiieren.

**6.** Verwaltungsknoten (100) nach einem der Ansprüche 1 bis 5, wobei der Vorgang, um die Kapazität von drahtlosen Kommunikationsverbindungen der verwalteten Knoten zu bestimmen, umfasst:

eine Kanalqualität für SideLink-, SL-, Kommunikationen auf Grundlage einer Schätzung der bei einer nächsten Übertragung erwarteten Leistung zu bestimmen;
ein verzögerungsoptimales Datenverteilungsschema zu bestimmen, das das Verteilen der Daten des mindestens einen Sensors von einem der verwalteten Knoten an einen benachbarten anderen der verwalteten Knoten definiert; und
eine maximale Paketgröße für Übertragungen der Daten des mindestens einen Sensors auf Grundlage der bestimmten Kanalqualität und des bestimmten verzögerungsoptimalen Datenverteilungsschemas zu bestimmen.

**7.** Verwaltungsknoten (100) nach Anspruch 6, wobei der Vorgang, um das verzögerungsoptimale Datenverteilungsschema zu bestimmen, das Verteilen der Daten des mindestens einen Sensors von dem einen der verwalteten Knoten an den benachbarten anderen der verwalteten Knoten so definiert, dass eine minimale Verzögerung bereitgestellt wird.

**8.** Verfahren, das von einem Verwaltungsknoten durchgeführt wird zum Steuern von Gerät-zu-Gerät- (D2D-) Kommunikationen von Sensordaten zwischen verwalteten Knoten von Fahrzeugen, Benutzervorrichtungen und/oder Straßenrandinfrastruktur, wobei das Verfahren umfasst:

Bestimmen (500) der Kapazität von drahtlosen Kommunikationsverbindungen der verwalteten Knoten;
Bestimmen (502) der Datenerzeugungsrate mindestens eines Sensors, die über die drahtlosen Kommunikationsverbindungen kommuniziert werden soll;
Auswählen (504), auf Grundlage der Kapazität der drahtlosen Kommunikationsverbindungen und der Datenerzeugungsrate, eines der Folgenden:

Komprimieren (505) von Daten des mindestens einen Sensors vor Übertragung über mindestens eine der drahtlosen Kommunikationsverbindungen,
Übertragen (506) von unkomprimierten Daten des mindestens einen Sensors über die mindestens eine der drahtlosen Kommunikationsverbindungen, und
Vorverarbeiten (507) von Daten des mindestens einen Sensors und Übertragen der vorverarbeiteten Daten über die mindestens eine der drahtlosen Kommunikationsverbindungen, wobei das Vorverarbeiten (507) von Daten des mindestens einen Sensors und Übertragen der vorverarbeiteten Daten über die mindestens eine der drahtlosen Kommunikationsverbindungen umfasst:

Erzeugen von Informationen, die Merkmale von Objekten charakterisieren, welche von dem mindestens einen Sensor erfasst werden; und
Übertragen der Informationen über die mindestens eine der drahtlosen Kommunikationsverbindungen; und
Initiieren (508) der Durchführung der Auswahl.

**9.** Verfahren nach Anspruch 8, wobei das Bestimmen (500) der Kapazität der drahtlosen Kommunikationsverbindungen der verwalteten Knoten umfasst:

Initiieren der Übertragung von Sondierungsreferenzsignalen an die verwalteten Knoten; und
Empfangen, auf Grundlage des Empfangs der Sondierungsreferenzsignale durch die verwalteten Knoten, von Kanalqualitätsmetriken von den verwalteten Knoten, die die Kapazität der drahtlosen Kommunikationsverbindungen der verwalteten Knoten charakterisieren.

**10.** Verfahren nach einem der Ansprüche 8 bis 9,

wobei die Bestimmung (500) der Kapazität von drahtlosen Kommunikationsverbindungen der verwalteten Knoten und die Bestimmung der Datenerzeugungsrate des mindestens einen Sensors, die über die drahtlosen Kommunikationsverbindungen kommuniziert werden soll, umfasst:

Schätzen einer Transferverzögerung von komprimierten Daten, um die Daten des mindestens einen Sensors mit der Datenerzeugungsrate zu komprimieren und die komprimierten Daten über die mindestens eine der drahtlosen Kommunikationsverbindungen zu übertragen;

Schätzen einer Transferverzögerung von unkomprimierten Daten, um die Daten mit der Datenerzeugungsrate des mindestens einen Sensors über die mindestens eine der drahtlosen Kommunikationsverbindungen zu übertragen; und

Schätzen einer Transferverzögerung von vorverarbeiteten Daten, um die Daten mit der Datenerzeugungsrate des mindestens einen Sensors vorzuverarbeiten und die vorverarbeiteten Daten über die mindestens eine der drahtlosen Kommunikationsverbindungen zu übertragen, und

wobei das Auswählen (504) einer der Folgenden auf einem Vergleich der Transferverzögerung von komprimierten Daten, der Transferverzögerung von unkomprimierten Daten und der Transferverzögerung von vorverarbeiteten Daten basiert:

Komprimieren von Daten des mindestens einen Sensors vor Übertragung über mindestens eine der drahtlosen Kommunikationsverbindungen;

Übertragen von unkomprimierten Daten des mindestens einen Sensors über die mindestens eine der drahtlosen Kommunikationsverbindungen; und

Vorverarbeiten von Daten des mindestens einen Sensors und Übertragen der vorverarbeiteten Daten über die mindestens eine der drahtlosen Kommunikationsverbindungen.

11. Verfahren nach einem der Ansprüche 8 bis 10, weiter umfassend:

Bestimmen von verfügbaren Verarbeitungsressourcen der verwalteten Knoten;

Bestimmen von Anforderungen für das Verarbeiten von Daten von dem mindestens einen Sensor, und

wobei das Auswählen einer der Folgenden auf der Kapazität der drahtlosen Kommunikationsverbindungen der verwalteten Knoten, der Datenerzeugungsrate des mindestens einen Sensors, den verfügbaren Verarbeitungsressourcen der verwalteten Knoten und den Anforderungen für das Verarbeiten von Daten von dem mindestens einen Sensor basiert:

Komprimieren von Daten des mindestens einen Sensors vor Übertragung über mindestens eine der drahtlosen Kommunikationsverbindungen;

Übertragen von unkomprimierten Daten des mindestens einen Sensors über die mindestens eine der drahtlosen Kommunikationsverbindungen; und

Vorverarbeiten von Daten des mindestens einen Sensors und Übertragen der vorverarbeiteten Daten über die mindestens eine der drahtlosen Kommunikationsverbindungen.

12. Verfahren nach einem der Ansprüche 8 bis 11, weiter umfassend:
vor dem Steuern von D2D-Kommunikationen von Sensordaten zwischen den verwalteten Knoten, Kommunizieren mit einer Gruppe von Knoten, welche die verwalteten Knoten einschließt, um den Verwaltungsknoten aus der Gruppe von Knoten auszuwählen und Tätigkeit des ausgewählten Knotens als Verwaltungsknoten zu initiieren.

13. Verfahren nach einem der Ansprüche 8 bis 12, wobei das Bestimmen (500) der Kapazität von drahtlosen Kommunikationsverbindungen der verwalteten Knoten umfasst:

Bestimmen einer Kanalqualität für SideLink-, SL-, Kommunikationen auf Grundlage einer Schätzung der bei einer nächsten Übertragung erwarteten Leistung;

Bestimmen eines verzögerungsoptimalen Datenverteilungsschemas, das das Verteilen der Daten des mindestens einen Sensors von einem der verwalteten Knoten an einen benachbarten anderen der verwalteten Knoten definiert; und

Bestimmen einer maximalen Paketgröße für Übertragungen der Daten des mindestens einen Sensors auf Grundlage der bestimmten Kanalqualität und des bestimmten verzögerungsoptimalen Datenverteilungsschemas.

14. Verfahren nach Anspruch 13, wobei das Bestimmen des verzögerungsoptimalen Datenverteilungsschemas das Verteilen der Daten des mindestens einen Sensors von dem einen der verwalteten Knoten an den benachbarten anderen der verwalteten Knoten so definiert, dass eine minimale Verzögerung bereitgestellt wird.

**Revendications**

1.  Nœud de gestion (100) pour commander des communications de dispositif à dispositif, D2D, de données de capteurs entre des nœuds gérés de véhicules (222), des dispositifs utilisateur et/ou une infrastructure routière, le nœud de gestion étant configuré pour réaliser des opérations pour :

    déterminer la capacité de liaisons de communication sans fil des nœuds gérés ;
    déterminer le taux de génération de données d'au moins un capteur devant être communiqué via les liaisons de communication sans fil ;
    sélectionner l'un de ce qui suit sur la base de la capacité des liaisons de communication sans fil et du taux de génération de données :

    la compression de données du au moins un capteur avant une transmission via au moins une des liaisons de communication sans fil,
    la transmission de données non compressées du au moins un capteur via la au moins une des liaisons de communication sans fil, et
    le prétraitement de données du au moins un capteur et la transmission des données prétraitées via la au moins une des liaisons de communication sans fil, dans lequel l'opération de prétraitement de données du au moins un capteur et de transmission des données prétraitées via la au moins une des liaisons de communication sans fil comprend :

    la génération d'informations caractérisant des caractéristiques d'objets détectées par le au moins un capteur ; et
    la transmission des informations via la au moins une des liaisons de communication sans fil ; et
    lancer la réalisation de la sélection.

2.  Nœud de gestion (100) selon la revendication 1, dans lequel l'opération de détermination de la capacité des liaisons de communication sans fil des nœuds gérés comprend :

    le lancement de la transmission de signaux de référence de sondage aux nœuds gérés ; et
    la réception à partir des nœuds gérés d'indicateurs de qualité de canal caractérisant la capacité des liaisons de communication sans fil des nœuds gérés sur la base de la réception des signaux de référence de sondage par les nœuds gérés.

3.  Nœud de gestion (100) selon l'une quelconque des revendications 1 et 2, dans lequel la détermination de la capacité de liaisons de communication sans fil des nœuds gérés et la détermination du taux de génération de données du au moins un capteur devant être communiqué via les liaisons de communication sans fil comprennent :

    l'estimation d'un délai de transfert de données compressées pour compresser les données du au moins un capteur au taux de génération de données et transmettre les données compressées via la au moins une des liaisons de communication sans fil ;
    l'estimation d'un délai de transfert de données non compressées pour transmettre les données au taux de génération de données du au moins un capteur via la au moins une des liaisons de communication sans fil ; et
    l'estimation d'un délai de transfert de données prétraitées pour prétraiter les données au taux de génération de données du au moins un capteur et transmettre les données prétraitées via la au moins une des liaisons de communication sans fil, et
    dans lequel la sélection de l'un de ce qui suit est basée sur une comparaison du délai de transfert de données compressées, du délai de transfert de données non compressées et du délai de transfert de données prétraitées inclut :

    la compression de données du au moins un capteur avant une transmission via au moins une des liaisons de communication sans fil ;
    la transmission de données non compressées du au moins un capteur via la au moins une des liaisons de communication sans fil ; et
    le prétraitement de données du au moins un capteur et transmettre les données prétraitées via la au moins une des liaisons de communication sans fil.

4.  Nœud de gestion (100) selon l'une quelconque des revendications 1 à 3, dans lequel les opérations comprennent en outre :

la détermination de ressources de traitement disponibles des nœuds gérés ;

la détermination d'exigences de traitement de données provenant du au moins un capteur, et

dans lequel la sélection de l'un de ce qui suit est basée sur la capacité des liaisons de communication sans fil des nœuds gérés, le taux de génération de données du au moins un capteur, les ressources de traitement disponibles des nœuds gérés et les exigences de traitement de données provenant du au moins un capteur :

la compression de données du au moins un capteur avant une transmission via au moins une des liaisons de communication sans fil ;

la transmission de données non compressées du au moins un capteur via la au moins une des liaisons de communication sans fil ; et

le prétraitement de données du au moins un capteur et la transmission des données prétraitées via la au moins une des liaisons de communication sans fil.

5. Nœud de gestion (100) selon l'une quelconque des revendications 1 à 4, dans lequel les opérations comprennent en outre :
avant que le nœud de gestion (100) ne fonctionne pour commander des communications D2D de données de capteurs entre les nœuds gérés, la communication avec un groupe de nœuds qui inclut les nœuds gérés pour sélectionner le nœud de gestion (100) dans le groupe de nœuds et lancer l'opération du nœud sélectionné en tant que nœud de gestion (100).

6. Nœud de gestion (100) selon l'une quelconque des revendications 1 à 5, dans lequel l'opération de détermination de la capacité de liaisons de communication sans fil des nœuds gérés comprend :

la détermination d'une qualité de canal pour des communications SideLink, SL, sur la base d'une estimation de performances attendues lors d'une prochaine transmission ;

la détermination d'un schéma de partage de données optimal en termes de délai, définissant le partage des données du au moins un capteur de l'un des nœuds gérés vers un autre des nœuds gérés adjacent ; et

la détermination d'une taille de paquet maximale pour les transmissions des données du au moins un capteur sur la base de la qualité de canal déterminée et du schéma de partage de données optimal en termes de délai déterminé.

7. Nœud de gestion (100) selon la revendication 6, dans lequel l'opération de détermination du schéma de partage de données optimal en termes de délai définit le partage des données du au moins un capteur dudit un des nœuds gérés à l'autre des nœuds gérés adjacent afin de fournir un délai minimal.

8. Procédé réalisé par un nœud de gestion pour commander des communications de dispositif à dispositif (D2D) de données de capteurs entre des nœuds gérés de véhicules, des dispositifs utilisateurs et/ou une infrastructure routière, le procédé comprenant :

la détermination (500) de la capacité de liaisons de communication sans fil des nœuds gérés ;

la détermination (502) du taux de génération de données d'au moins un capteur devant être communiqué via les liaisons de communication sans fil ;

la sélection (504) de l'un de ce qui suit sur la base de la capacité des liaisons de communication sans fil et du taux de génération de données :

la compression (505) de données du au moins un capteur avant une transmission via au moins une des liaisons de communication sans fil,

la transmission (506) de données non compressées du au moins un capteur via la au moins une des liaisons de communication sans fil, et

le prétraitement (507) de données du au moins un capteur et la transmission des données prétraitées via la au moins une des liaisons de communication sans fil, dans lequel le prétraitement (507) de données du au moins un capteur et la transmission des données prétraitées via la au moins une des liaisons de communication sans fil comprennent :

la génération d'informations caractérisant des caractéristiques d'objets détectées par le au moins un capteur ; et

EP 4 578 174 B1

la transmission des informations via la au moins une des liaisons de communication sans fil ; et
le lancement (508) de la réalisation de la sélection.

9. Procédé selon la revendication 8, dans lequel la détermination (500) de la capacité des liaisons de communication sans fil des nœuds gérés comprend :

le lancement de la transmission de signaux de référence de sondage aux nœuds gérés ; et
la réception à partir des nœuds gérés d'indicateurs de qualité de canal caractérisant la capacité des liaisons de communication sans fil des nœuds gérés sur la base de la réception des signaux de référence de sondage par les nœuds gérés.

10. Procédé selon l'une quelconque des revendications 8 et 9,

dans lequel la détermination (500) de la capacité de liaisons de communication sans fil des nœuds gérés et la détermination du taux de génération de données du au moins un capteur devant être communiqué via les liaisons de communication sans fil comprennent :

l'estimation d'un délai de transfert de données compressées pour compresser les données du au moins un capteur au taux de génération de données et transmettre les données compressées via la au moins une des liaisons de communication sans fil ;
l'estimation d'un délai de transfert de données non compressées pour transmettre les données au taux de génération de données du au moins un capteur via la au moins une des liaisons de communication sans fil ; et
l'estimation d'un délai de transfert de données prétraitées pour prétraiter les données au taux de génération de données du au moins un capteur et transmettre les données prétraitées via la au moins une des liaisons de communication sans fil, et

dans lequel la sélection (504) de l'un de ce qui suit est basée sur une comparaison du délai de transfert de données compressées, du délai de transfert de données non compressées et du délai de transfert de données prétraitées :

la compression de données du au moins un capteur avant une transmission via au moins une des liaisons de communication sans fil ;
la transmission de données non compressées du au moins un capteur via la au moins une des liaisons de communication sans fil ; et
le prétraitement de données du au moins un capteur et la transmission des données prétraitées via la au moins une des liaisons de communication sans fil.

11. Procédé selon l'une quelconque des revendications 8 à 10, comprenant en outre :

la détermination de ressources de traitement disponibles des nœuds gérés ;
la détermination d'exigences de traitement de données provenant du au moins un capteur, et
dans lequel la sélection de l'un de ce qui suit est basée sur la capacité des liaisons de communication sans fil des nœuds gérés, le taux de génération de données du au moins un capteur, les ressources de traitement disponibles des nœuds gérés et les exigences de traitement de données provenant du au moins un capteur :

la compression de données du au moins un capteur avant une transmission via au moins une des liaisons de communication sans fil ;
la transmission de données non compressées du au moins un capteur via la au moins une des liaisons de communication sans fil ; et
le prétraitement de données du au moins un capteur et la transmission des données prétraitées via la au moins une des liaisons de communication sans fil.

12. Procédé selon l'une quelconque des revendications 8 à 11, comprenant en outre :
avant de commander des communications D2D de données de capteurs entre les nœuds gérés, la communication avec un groupe de nœuds qui inclut les nœuds gérés pour sélectionner le nœud de gestion dans le groupe de nœuds et lancer l'opération du nœud sélectionné en tant que nœud de gestion.

13. Procédé selon l'une quelconque des revendications 8 à 12, dans lequel la détermination (500) de la capacité de liaisons de communication sans fil des nœuds gérés comprend :

la détermination d'une qualité de canal pour des communications SideLink, SL, sur la base d'une estimation de performances attendues lors d'une prochaine transmission ;

la détermination d'un schéma de partage de données optimal en termes de délai, définissant le partage des données du au moins un capteur de l'un des nœuds gérés vers un autre des nœuds gérés adjacent ; et

la détermination d'une taille de paquet maximale pour les transmissions des données du au moins un capteur sur la base de la qualité de canal déterminée et du schéma de partage de données optimal en termes de délai déterminé.

14. Procédé selon la revendication 13, dans lequel la détermination du schéma de partage de données optimal en termes de délai définit le partage des données du au moins un capteur dudit un des nœuds gérés à l'autre des nœuds gérés adjacent afin de fournir un délai minimal.

*Figure 1*

**Figure 2**

Managing Node 100

D2D communication entity

Request Vehicle Capabilities

Provide Vehicle Roles

Vehicle sensor data and capability
evaluation

Vehicle role selection and role
assignment function

**Input:**
data streams from
vehicles
(determined) in
cluster

**Output:**
Instructions to
respective
vehicles on
role to assume
in cluster

*Figure 3*

**Input:**
data streams from
vehicles
(determined) in
cluster

D2D communication entity

Request Device Capabilities

Provide Device Roles

Device sensor data and capability
evaluation

Device role selection and role
assignment function

**Output:**
Instructions to
respective
devices on
role to assume
in cluster

*Figure 3*

Managing node assesses other nodes in a group of nodes — 400

Managing node determines a set of data sharing schemes based on the assessment — 401

Data sharing schemes are shared with the group of nodes — 402

Managing node monitors and re-assesses group of nodes and data sharing schemes — 403

Scheme Change? — 404

Yes

No

Detect if new sensor data needs to be shared — 405

No

Data? — 406

Share the new sensor data among the nodes according to the data sharing schemes — 407

Yes

*Figure 4*

Determine capacity of wireless communication links of the managed nodes — 500

Determine data generation rate of at least one sensor to be communicated through the wireless communication links — 502

Select one of the following based on the capacity of the wireless communication links and the data generation rate: — 504

compress data of the at least one sensor before transmission through at least one of the wireless communication links — 505

transmit uncompressed data of the at least one sensor through the at least one of the wireless communication links — 506

preprocess data of the at least one sensor and transmit the preprocessed data through the at least one of the wireless communication links — 507

Initiate performance of the selection — 508

*Figure 5*

Managing Node
100

Processor Circuitry
600

Memory Circuitry 610

Executable Instructions
612

Wireless
Communication
Interface
620

*Figure 6*

**EP 4 578 174 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021114616 A